# EUROPÄISCHE PATENTSCHRIFT

(11) **EP 1 323 274 B1**
(45) Veröffentlichungstag und Bekanntmachung des Hinweises auf die Patenterteilung: **08.08.2007**
(21) Anmeldenummer: 01956276.8
(22) Anmeldetag: 26.06.2001
(51) Int. Cl.: H04L 29/06, H04Q 7/24

(54) **INFORMATIONSÜBERTRAGUNG ÜBER DEN SIGNALISIERUNGSKANAL EINES MOBILFUNKNETZES**
TRANSMISSION OF INFORMATION VIA THE SIGNALLING CHANNEL OF A MOBILE RADIOTELEPHONY NETWORK
TRANSMISSION D'INFORMATION PAR L'INTERMEDIAIRE D'UN CANAL DE SIGNALISATION D'UN RESEAU DE TELEPHONIE MOBILE

(30) Priorität: 04.10.2000 DE 10049146
(43) Veröffentlichungstag der Anmeldung: 02.07.2003
(73) Patentinhaber: Orga Systems GmbH, 33104 Paderborn (DE)
(72) Erfinder: SCHUCHART, Goetz, 33098 Paderborn (DE)
(74) Vertreter: Richardt, Markus Albert
(86) Internationale Anmeldenummer: PCT/DE2001/002301
(87) Internationale Veröffentlichungsnummer: WO 2002/030084

(56) Entgegenhaltungen:
- WO-A-00/08885
- WO-A-98/11744
- WO-A-98/47270
- WO-A-99/35595
- COLLESI S ET AL: "SMS BASED APPLICATIONS FOR GSM NETWORKS" TECHNICAL REPORTS - CSELT, TURIN, IT, Bd. 23, Nr. 3, 1. Juni 1995 (1995-06-01), Seiten 337-349, XP000573777 ISSN: 0393-2648

## Beschreibung

Die Erfindung betrifft ein Verfahren zur Bereitstellung einer auf einem Server-System gespeicherten Information, wie insbesondere eine mit einem Internet- bzw. Web- bzw. WAP-Browser anforder- und anzeigbare Internet- bzw. Web- bzw. WAP-Seite, ein Computerprogrammprodukt, das direkt in den internen Speicher eines digitalen Computers geladen werden kann, ein Computerprogrammprodukt, das auf einem computergeeigneten Medium gespeichert ist, ein Mobilfunkendgerät und ein Mobilfunk-Kommunikationssystem nach dem Oberbegriff des jeweiligen unabhängigen Patentanspruchs.

In bekannter Weise erfolgt der Aufruf von Internet- bzw. Web- bzw. WAP-Seiten aus dem Internet über den Web-Browser eines PCs bzw. Computers oder ein WAP-fähiges Mobilfunkendgerät, insbesondere ein WAP-fähiges Mobiltelefon. Die Web- bzw. WAP-Seiten weisen typischerweise sogenannten HTML-, WML- oder XML-Code auf.

Weiterhin ist es bekannt Informationen mittels eines Mobilfunkendgeräts, wie insbesondere ein GSM-Mobiltelefon, das das WAP (Wireless Application Protocol) unterstützt, bei einem ..Service Provider, der solche Informationen bzw. sogenannte "WAP-Seiten" bereitstellt, über den Sprachkanal des Mobilfunknetzes mittels des Mobilfunkendgeräts abzufragen und die bereitgestellten WAP-Seiten über den Sprachkanal des Mobilfunknetzes an das Mobilfunkendgerät zu übertragen. Die Anzeige der WAP-Seiten erfolgt nachfolgend auf dem Display des Mobilfunkendgeräts.

Hierzu benötigt der Benutzer ein im Vergleich zu einem herkömmlichen Mobilfunkendgerät, wie insbesondere ein Mobiltelefon, aufwendigeres und damit teures "WAP-fähiges" Mobilfunkendgerät.

Aus der WO 99/35595 A ist ein Verfahren und ein System zum Betrachten von Hypertext-Seiten bekannt, bei dem ein Benutzer mittels eines GSM-kompatiblen Mobiltelefons durch Ausfüllen eines TTML-Formulars eine gewünschte Web-Seite auswählt. Die Auswahl wird anschließend an einen Proxy-Server übermittelt, der die Seite aus dem Internet lädt und sie in konvertierter Form, beispielsweise als SMS oder USSD-Nachricht, zu dem GSM-Telefon überträgt. Hierbei ist insbesondere als nachteilig anzusehen, dass zum Anzeigen beziehungsweise Ausfüllen der genannten Anforderungs-Formulare eine relativ aufwändige Ausgestaltung des mobilen Endgeräts notwendig ist.

Die WO 98/47270 A beschreibt ein ähnliches Verfahren betreffend die Bereitstellung von Daten in einem Mobilfunknetz, bei dem die Anforderung von Daten durch die mobile Einheit und die (Rück-)Übertragung der entsprechenden Informationen explizit jeweils durch Übermittlung einer relative langsamen SMS-Nachricht erfolgt.

Aus der WO 98/11744 A1 ist ein Datenservice in einem mobilen Kommunikationsnetz bekannt, bei dem mittels eines mobilen Endgeräts eine Kurzmitteilung (Short Message) an ein Short Message Service Center (SMSC) übermittelt, welches mit dem Internet verbunden ist und über dieses Verbindungen zu Web-Servern aufbauen kann. Der Benutzer übermittelt die Anforderung einer bestimmten Web-Seite an das SMSC, dieses lädt die entsprechenden Inhalte über das Internet, konvertiert zumindest Teile davon in eine Kurzmitteilung und überträgt diese zu dem Endgerät des Benutzers, welches die Kurzmitteilung anzeigt. Das beschriebene Verfahren besitzt den inhärenten Nachteil einer relativ langsamen Übermittlungsgeschwindigkeit über den zugeordneten Signalisierungskanal und erfordert zudem aufgrund des Vorhandenseins eines SMSC relativ hohe Anforderungen an die vorzuhaltende Infrastruktur stellt.

Der Erfindung liegt die Aufgabe zugrunde, ein Verfahren der eingangs genannten Art dahingehend weiterzuentwickeln, dass eine schnellere Informationsübermittlung unter Verwendung relativ einfacher Kommunikationsnetze und/oder Mobilfunkendgeräte ermöglicht ist.

Die Aufgabe der vorliegenden Erfindung wird durch die in den unabhängigen Patentansprüchen angegebenen Maßnahmen jeweils gelöst. Vorteilhafte Ausgestaltungen der Erfindung sind in den zugeordneten abhängigen Patentansprüchen angegeben.

Ein herkömmliches Mobilfunknetz zur Kommunikation mit einem Mobilfunkendgerät, wie ein Mobiltelefon oder ein entsprechender Organizer, kann mit dem Mobilfunkendgerät sowohl über einen Sprachkanal als auch über einen Signalisierungskanal kommunizieren. Der Signalisierungskanal ist in der Regel insbesondere im Hinblick auf die maximal mögliche Übertragungsrate gegenüber dem Sprachkanal beschränkt. Ein solcher Kanalsatz aus einem Signalisierungskanal und einem Sprachkanal wird beispielsweise von einem GSM-, GPRS- oder UMTS-Mobilfunknetz bereitgestellt, wobei der Signalisierungskanal bei diesen Mobilfunknetzen mit Unstructured Supplementary Services Data-Kanal oder abgekürzt mit USSD-Kanal bezeichnet wird.

Ebenso stellt ein sogenanntes D-AMPS, CDMA- oder TDMA-Mobilfunknetz einen solchen Kanalsatz aus einem Signalisierungskanal und einem Sprachkanal zur Kommunikation mit einem für dieses Mobilfunknetz geeigneten Mobilfunkendgerät zur Verfügung. Der Signalisierungskanal eines solchen Mobilfunknetzes wird als sogenannter IS-41 Feature Control Service Data-Kanal bzw. abgekürzt mit FCS-Data-Kanal bezeichnet.

Ein wesentlicher Aspekt des erfindungsgemäßen Verfahrens besteht darin, daß ein herkömmliches Mobilfunkendgerät in die Lage versetzt wird, eine Internet- bzw. Web- bzw. WAP-Seite über den Signalisierungskanal des Mobilfunknetzes anfordern zu können. Hierbei kann es sich bei dem Mobilfunkendgerät insbesondere um ein lediglich für die Sprachkommunikation ausgelegtes Mobilfunkendgerät, insbesondere auch um ein WAP-fähiges Mobilfunkendgerät oder auch um ein Endgerät handeln, das lediglich den Signalisierungskanal nutzt.

Ein weiterer wesentlicher Aspekt der Erfindung besteht darin, die über den Signalisierungskanal des Mobilfunknetzes übermittelte Anforderung der Internet- bzw. Web- bzw. WAP-Seite oder eines Teils dieser Seite in eine Anforderung zu konvertieren, die einer Anforderung der Internet- bzw. Web- bzw. WAP-Seite durch einen Internet- bzw. Web- bzw. WAP-Browser entspricht. Eine entsprechende Anforderung bzw. der Aufruf der Internet- bzw. Web- bzw. WAP-Seite geschieht bei einem Internet- bzw. Web- bzw. WAP-Browser typischerweise über das HTTP-Protokoll. Da dieses Protokoll zur Übertragung über den Signalisierungskanal nicht zur Verfügung steht, wird erfindungsgemäß eine auf den betreffenden Signalisierungskanal abgestimmte Anforderung bzw. ein auf dem Signalisierungskanal abgestimmter Aufruf der Internet- bzw. Web- bzw. WAP-Seite an eine Konvertierungsvorrichtung bzw. an eine Hardware- und/oder Software-Schnittstelle übermittelt, die die über den Signalisierungskanal übermittelte Anforderung der Internet- bzw. Web- bzw. WAP-Seite konvertiert bzw. übersetzt. Nach der Konvertierung bzw. Übersetzung einer Anforderung über den Signalisierungskanal liegt dann erfindungsgemäß eine Anforderung vor, die der Anforderung eines Internet- bzw. Web-Browsers zum Aufruf der Internet- bzw. Web- bzw. WAP-Seite entspricht. Die Internet- bzw. Web- bzw. WAP-Seite wird dann von einem Server-System, wie bei einer Anforderung über einen Internet- bzw. Web-Browser, bereitgestellt.

Ein weiterer wesentlicher Aspekt der Erfindung besteht darin, daß die Internet- bzw. Web- bzw. WAP-Seite oder ein Teil dieser Seite in eine Textnachricht konvertiert wird, die über den Signalisierungskanal, der typischerweise lediglich die Übermittlung von alphanumerischen Zeichen und nicht die Übermittlung von Grafiken oder Piktogrammen ermöglicht, an das Mobilfunkendgerät übermittelt und auf dem Display des Mobilfunkendgeräts zur Anzeige gebracht wird.

An der erfindungsgemäßen Lösung ist insbesondere von Vorteil, daß ein herkömmliches Server-System, das insbesondere einen Server-Computer und einen Web-Seiten-Speicher umfaßt, und das Internetzugriffe auf Web-Seiten mittels eines Web-Browsers organisiert, weiterhin verwendet werden kann. Erfindungsgemäß kann eine über einen Web-Browser und eine Internetverbindung vom Server-Computer bereitgestellte Web-Seite auch, in eingeschränkter Form, einem Mobilfunkendgerät zur Verfügung gestellt werden. Hierzu muß das bekannte Server-System lediglich die Abfrage des Mobilfunkendgeräts über den Signalisierungskanal in eine Web-Browser-konforme Anforderung übersetzen, die aufgerufene Web-Seite bereitstellen und in eine Textnachricht übersetzen bzw. konvertieren, die insbesondere aus alphanumerischen Zeichen besteht, die sich über den Signalisierungskanal des Mobilfunknetzes an das Mobilfunkendgerät übertragen lassen. So können auch einem herkömmlichen Mobilfunkendgerät, das für den Empfang von Internet- bzw. Web- bzw. WAP-Seiten nicht ausgelegt ist, Web-Seiten-Inhalte übermittelt werden.

An der Verwendung des Signalisierungskanals des Mobilfunknetzes ist zudem von Vorteil, daß dieser eine Echtzeit-Verbindung zwischen dem Mobilfunkendgerät und dem Sei-ver-System, das die Web-Seiten bereitstellt, ermöglicht. Dies hat gegenüber der Übertragung einer entsprechenden Textnachricht per Short Message Service (SMS) den Vorteil einer schnelleren Anzeige auf dem Mobilfunkendgerät.

Ein besonderer Vorteil an der Verwendung des Signalisierungskanals zur Übertragung von Web-Seiten bzw. Web-Inhalten von Web-Seiten in der Form von Textnachrichten besteht zudem darin, daß der vom Mobilfunknetz bereitgestellte Sprachkanal dem Mobilfunkendgerät parallel bzw. simultan zu einer Datenübertragung über den Signalisierungskanal zur Verfügung steht. So ist es beispielsweise möglich ein Telefongespräch mit einem herkömmlichen Mobilfunkendgerät zu führen und parallel den Börsenkurs ausgewählter Aktien oder eine Wettervorhersage abzufragen.

Ein weiterer wesentlicher Vorteil der Erfindung besteht darin, daß lediglich die Web-Seiten des Server-Systems in herkömmlicher Weise aktualisiert werden müssen. Eine parallele Aktualisierung von Informationsinhalten bzw. Informationsseiten ist nicht erforderlich. Dies verringert die Kosten zum Unterhalt eines solchen Systems erheblich.

Die Erfindung wird nachfolgend anhand von schematischen Zeichnungen näher erläutert, wobei gleiche Bezugszeichen gleiche oder gleichwirkende Teile bezeichnen. Es zeigen:

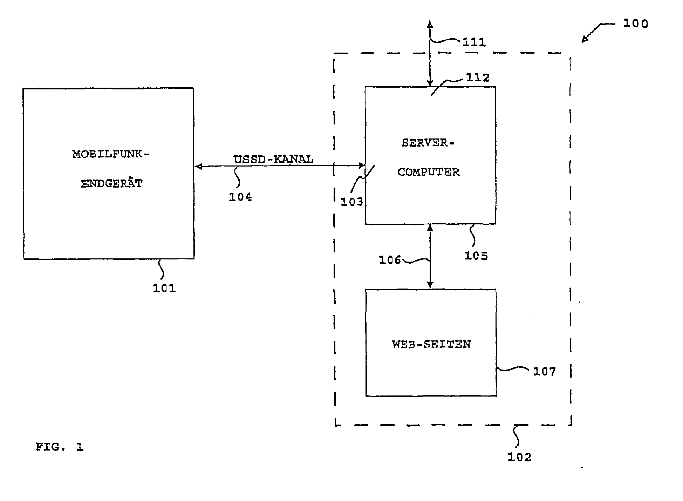

- Fig. 1: ein Blockschaltbild wesentlicher Komponenten eines erfindungsgemäßen Mobilfunk-Kommunikationssystems in schematischer Darstellung;

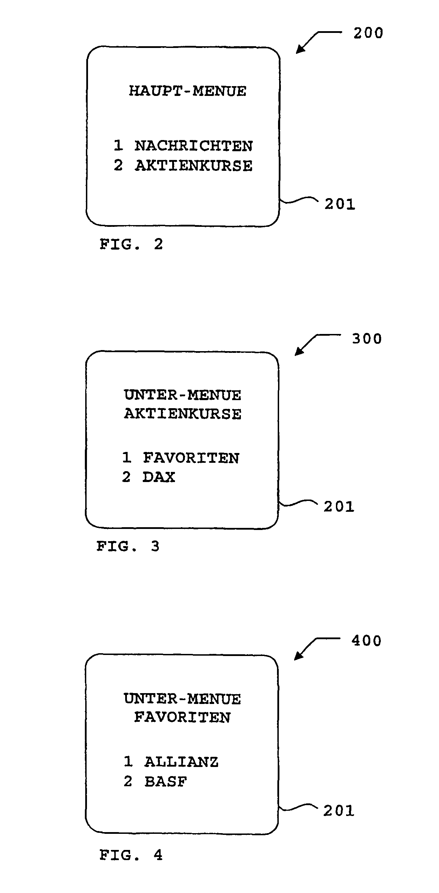

- Fig. 2: die Darstellung der Anzeige des Displays eines Mobilfunkendgeräts an das von einem Server-System über den Signalisierungskanal des betreffenden Mobilfunknetzes eine erste Textnachricht in Form eines Haupt-Menues übermittelt worden ist;
- Fig. 3: eine auf dem Display des Mobilfunkendgeräts angezeigte zweite Textnachricht in Form eines Unter-Menues, nachdem bei der Anzeige des Haupt-Menues gemäß Fig. 2 der Unterpunkt "Aktienkurse" ausgewählt und dessen Unter-Menue von dem Server-System über den Signalisierungskanal des betreffenden Mobilfunknetzes an das Mobilfunkendgerät übertragen worden ist; und
- Fig. 4: eine von dem Mobilfunkendgerät angezeigte dritte Textnachricht in Form des Unter-Menues "Favoriten", nachdem der Menue-Punkt "Favoriten" gemäß Fig. 3, von dem Benutzer des Mobilfunkendgeräts ausgewählt und die entsprechende Textnachricht über den Signalisierungskanal des betreffenden Mobilfunknetzes an das Mobilfunkendgerät übertragen worden ist.

Das in Fig. 1 dargestellte Blockschaltbild zeigt die wesentlichen Komponenten eines erfindungsgemäßen Mobilfunk-Kommunikationssystems 100. Die wesentlichen Komponenten werden durch ein Mobilfunkendgerät 101 und ein Server-System 102 gebildet, das mit dem Mobilfunkendgerät 101 über einen Unstructured Supplementary Services Data-Kanal bzw. USSD-Kanal 104 in Verbindung steht. Bei dem in Fig. 1 dargestellten Ausführungsbeispiel der Erfindung wird von einem Server-Computer 105 des Server-Systems 102 eine Hardware- und/oder Software-Schnittstelle gebildet, die mit dem Bezugszeichen 103 angedeutet ist. Diese Schnittstelle bildet einen sogenannten USSD/HTTP-Gateway. In dem Serversystem 102 ist ein herkömmlicher Web-Seiten-Speicher 107 zur Speicherung von Internet- bzw. Web- bzw. WAP-Seiten vorgesehen.

In herkömmlicher Weise kann über eine Internetverbindung 111 und einen HTTP-Gateway, der mit dem Bezugszeichen 112 angedeutet ist, eine Web-Seite im Web-Seiten-Speicher 107 von dem Web-Browser eines PCs oder Computers (nicht dargestellt) abgerufen werden. Der Server-Computer 105 bildet üblicherweise den HTTP-Gateway 112 durch eine Software-Schnittstelle und organisiert die Bereitstellung der von dem Internet- bzw. Web- bzw. WAP-Browser angeforderten bzw. aufgerufenen Web-Seite aus dem Web-Seiten-Speicher 107 und deren Übermittlung über den HTTP-Gateway 112 und die Internetverbindung 111 an den Internet- bzw. Web-Browser. Üblicherweise werden die in dem Web-Seiten-Speicher 107 gespeicherten Web-Seiten (nicht dargestellt) unter Verwendung des Server-Computers 105 und der Datenverbindung 106 regelmäßig aktualisiert.

Bei dem in Fig. 1 dargestellten Mobilfunk-Kommunikationssystem 100 bearbeitet der Server-Computer 105 des Server-Systems 102 zudem erfindungsgemäße Anforderungen bzw. Abrufe von Inhalten der in dem Web-Seiten-Speicher 107 gespeicherten Web-Seiten, die von dem Mobilfunkendgerät 101 über den Unstructured Supplementary Services Data-Kanal 104 und den USSD/HTTP-Gateway 103 an den Server-Computer 105 übermittelt werden. Zur Anforderung bzw. zum Abruf des Inhalts, insbesondere des Textinhalts einer Web-Seite des Web-Seiten-Speichers 107, veranlaßt der Benutzer das Mobilfunkendgerät zur Aussendung eines sogenannten USSD-Strings über den Unstructured Supplementary Services Data-Kanal des Mobilfunknetzes, wie insbesondere ein GSM- Mobilfunknetz. Ein USSD-String zur Übertragung über den Unstructured Supplementary Services Data-Kanal eines GSM-Mobilfunknetzes weist typischerweise an seinem Anfang ein "*", gefolgt von einer Ziffernfolge und am Ende ein "#" auf, wie beispielsweise der USSD-String: *201#. Das "*" veranlaßt eine Übertragung der nachfolgenden Ziffernfolge über den Unstructured Supplementary Services Data-Kanal und das "#" zeigt das Ende des aktuellen USSD-Strings an.

Wird ein solcher USSD-String von dem Benutzer eines herkömmlichen GSM-Mobiltelefons eingegeben und nachfolgend die SENDE-Taste betätigt, so wird die Ziffernfolge 201 über den Unstructured Supplementary Services Data-Kanal des Mobilfunknetzes an den Betreiber des Mobilfunknetzes übermittelt. Die Ziffernfolge "201" soll in dem in Fig. 1 dargestellten Ausführungsbeispiel von dem Mobilfunknetz dahingehend verstanden werden, daß eine Verbindung über den Unstructured Supplementary Services Data-Kanal 104 mit dem Server System 102 bzw. dem Server-Computer 105 gewünscht wird. Da ein herkömmlicher Server-Computer lediglich für die Anforderung bzw. den Abruf von Internet- bzw. Web- bzw. WAP-Seiten mittels des HTTP-Protokolls eingerichtet bzw. programmiert ist, wird die bekannte Software des Server-Computers erfindungsgemäß zumindest dahingehend modifiziert, daß der Server-Computer 105 eine Software-Schnittstelle bildet, die einen USSD/HTTP-Gateway 104 darstellt. Es versteht sich, daß alternativ auch ein separater USSD/HTTP-Gateway (nicht dargestellt) als Hardware- oder Softwarelösung in dem Server-System 102 vorgesehen sein kann.
Bei dem in Fig. 1 dargestellten Ausführungsbeispiel übermittelt der Server-Computer 105 nach einer Datenverbindung des Mobilfunkendgeräts 101 über den Unstructured Supplementary Services Data-Kanal 104 mit dem Server-Computer 105 eine erste Textnachricht über den USSD/HTTP-Gateway 103 und den Unstructured Supplementary Services Data-Kanal 104 an das Mobilfunkendgerät 101. Die erste Textnachricht wird in dem Display des Mobilfunkendgeräts 101 dargestellt und entspricht der Abbildung in Fig. 2. Die erste Textnachricht zeigt in diesem Ausführungsbeispiel ein Haupt-Menue 200 mit den Unterpunkten: "Nachrichten" und "Aktienkurse". Ferner ist dem Unterpunkt "Nachrichten" eine "1" und dem Menuepunkt "Aktienkurse" eine "2" zugeordnet. Zumindest für die aktuelle USSD-Sitzung speichert das Server-System dem betreffenden Benutzer zugeordnet den HTTP-Link der Internetadresse der Seite oder Information, der der "1" und der "2" zugeordnet ist. Für die "1" könnte dies beispielsweise die Internetadresse "http://www.nachrichten.de/news.html" und für die "2" beispielsweise die Internetadresse "http://www.benutzername.aktienkurse.de" sein. Zusammenfassend wird also erfindungsgemäß jeder Ziffer zur Auswahl eines Menue-Punkts ein HTTP- bzw. Hypertext-Link, wie z. B. eine Internet- oder Intranetadresse, zugeordnet. Damit weiß das Server-System 102 welche Web- oder WAP-Seite in konvertierter Form an welchen Benutzer während der betreffenden USSD-Sitzung übermittelt werden soll.

Gibt der Benutzer des Mobilfunkendgeräts 101 nun beispielsweise die Zeichenfolge "1" über die Tastatur des Mobilfunkendgeräts 101 ein und betätigt die SENDE-Taste des Mobilfunkendgeräts 101, so wird die "1" über den Unstructured Supplementary Services Data-Kanal 104 und den USSD/HTTP-Gateway 103 an den Server-Computer 105 übermittelt, wobei der USSD/HTTP-Gateway den USSD-String in einen für den Server-Computer 105 verständlichen HTTP-String konvertiert bzw. übersetzt. Nach der Konvertierung übersendet der Server-Computer 105 eine zweite Textnachricht über den USSD/HTTP-Gateway 103 und den USSD-Kanal 104 an das Mobilfunkendgerät 101. Auf dem Display 201 des Mobilfunkendgeräts 101 erscheint daraufhin das in Fig. 3 dargestellte "Unter-Menue Aktienkurse" mit den Menue-Punkten "1 Favoriten" und "2 DAX".

Gibt der Benutzer des Mobilfunkendgeräts 101 nun den USSD-String "1" über die Tastatur des Mobilfunkendgeräts 101 ein und betätigt nachfolgend die SENDE-Taste des Mobilfunkendgeräts 101, so wird dieser USSD-String über den Unstructured Supplementary Services Data-Kanal 104 an den Server-Computer 105 bzw. das Server-System 102 übermittelt. Der Server-Computer 105 übermittelt dem Mobilfunkendgerät 101 über den Unstructured Supplementary Services Data-Kanal 104 eine dritte Textnachricht, die auf dem Display 201 des Mobilfunkendgeräts 101 in der in Fig. 4 dargestellten Form als "Unter-Menue Favoriten" mit den Menue-Punkten "1 Allianz" und "2 BASF" dargestellt wird.

Gibt der Benutzer des Mobilfunkendgeräts 101 nun beispielsweise über die Tastatur den USSD-String "2" ein und betätigt die SENDE-Taste des Mobilfunkendgeräts 101, so wird dieser USSD-String bzw. die Ziffer bzw. Ziffernfolge dieses USSD-Strings über den Unstructured Supplementary Services Data-Kanal 104 an den Server-Computer 105 übermittelt und dieser übermittelt seinerseits den aktuellen Aktienkurs der Firma BASF über den Unstructured Supplementary Services Data-Kanal 104 an das Mobilfunkendgerät 101, der auf dem Display 201 des Mobilfunkendgeräts 101 angezeigt wird (nicht dargestellt). In entsprechender Weise lassen sich auch die anderen Menue-Punkte der in den Figuren 2, 3 und 4 dargestellten Menues von dem Server-Computers 105 anfordern bzw. abrufen.

Damit sich der Benutzer des Mobilfunkendgeräts nicht durch mehrere Menues "hangeln" muß, um zu den Aktienkursen seiner Favoriten "Allianz" und "BASF" zu gelangen, sind in dem Telefonbuch seines Mobilfunkendgeräts 101 Einträge vorgesehen, die einen direkten Aufruf des Aktienkurses der Firmen Allianz und BASF gestatten. Bei dem in den Figuren dargestellten Beispiel ist dem Eintrag "Allianz" im Telefonbuch des Mobilfunkendgeräts 101 der USSD-String *201*2*1*1#" zugeordnet, so daß dem Mobilfunkendgerät 101 von dem Server-Computer 105 nach Absendung dieses Strings unmittelbar der aktuelle Aktienkurs der Firma Allianz über den Unstructured Supplementary Services Data-Kanal übermittelt und auf dem Display 201 des Mobilfunkendgeräts 101 angezeigt wird. In diesem Ausführungsbeispiel wäre dann dem Telefonbucheintrag "BASF" der USSD-String "*201*2*1*2#" zugeordnet. Der "*", z. B. zwischen dem Teil-String "2*1*2", trennt die Ziffern verschiedener Menue-Punkte und erlaubt daher die Verwendung von mehr als 10 Menue-Punkten in einem Menue.

Bevorzugterweise stellt sich der Benutzer des Mobilfunkendgeräts 101 die in den Figuren 2 bis 4 dargestellten Menues während einer Internet-Sitzung bei einer Kommunikation mit dem Server-Computer 105 des Server-Systems 102 unter Verwendung eines herkömmlichen Internet- bzw. Web-Browsers auf dem Server-System 102 selbst zusammen. Damit eine Zuordnung der von dem Benutzer zusammengestellten Menues zu dem betreffenden Benutzer möglich ist, gibt der Benutzer dem Server-System 102 die seiner SIM-Karte (nicht dargestellt) des Mobilfunkendgeräts 101 zugeordnete Mobiltelefonnummer bekannt. Der Server-Computer ordnet dieser Telefonnummer bzw. Mobiltelefonnummer die von dem Benutzer zusammengestellten und von dem Server-System 102 gespeicherten Menues zu.

Bei einer nachfolgenden Kommunikation des Mobilfunkendgeräts 101 mit dem Server-System 102 übermittelt der Server-Computer 105 bevorzugterweise Telefonbucheinträge an das Mobilfunkendgerät 101, die in dessen Telefonbuch gespeichert werden. Diese Übermittlung kann beispielsweise über sogenannte OTA-Nachrichten, z. B. über den Short Message Service (SMS), erfolgen, wobei OTA die Abkürzung "Over the Air" ist. Bei den Telefonbucheinträgen handelt es sich bevorzugt um die USSD-Strings bzw. USSD-Servicenummern, die einen unmittelbaren Aufruf der Menue-Punkte der von dem Server-System 102 bereitgestellten bzw. der von dem Benutzer selbst zusammengestellten Menues erlauben. Damit von dem Server-System 102 erkannt werden kann, wer der konkrete Benutzer ist bzw. welche Menues und Menue-Punkte bei einer Verbindung über den Unstructured Supplementary Services Data-Kanal 104 für diesen Benutzer bereitgestellt werden sollen, erfolgt bevorzugterweise eine Übermittlung der Mobiltelefonnummer von dem Mobilfunknetz an das Service-System 102. Bei GSM-Netzen wird die Mobiltelefonnummer anhand der konkreten SIM-Karte des Mobilfunkendgeräts 101 und bei TDMA- oder CDMA-Netzen anhand des in dem Mobilfunkendgerät gespeicherten, konkreten Authentifizierungscode identifiziert bzw. ermittelt.

Die von dem Benutzer zusammengestellten Menues, die von dem Server-System 102 um interessante weitere Menue-Punkte ergänzt werden können, werden bevorzugt in dem Web-Seiten-Speicher 107 gespeichert. Bei ihrem Abruf über das Mobilfunkendgerät 101 und den Unstructured Supplementary Services Data-Kanal 104 werden die mit den Menue-Punkten abgefragten Daten von dem Server-Computer 105 aus dem Web-Seiten-Speicher 107 geladen, dessen Seiten üblicherweise in angemessenen Intervallen aktualisiert werden. Bei den abgefragten Daten kann es sich beispielsweise um einen von dem Server-System 102 häufig aktualisierten Börsenkurs oder um demgegenüber weniger häufig aktualisierte Wetternachrichten handeln. Diese Daten oder auch eine im Web-Seiten-Speicher 107 gespeicherte und abgerufene Seite wird von dem Server-Computer 105 in eine Textnachricht umgewandelt und über den Unstructured Supplementary Services Data-Kanal 104 an das Mobilfunkendgerät 101 zur Anzeige auf dessen Display 201 übertragen.

Bevorzugterweise speichert der Server-Computer 105 in benutzeridentifizierender Weise, welche HTTP-Links von dem betreffenden Benutzer bzw. von dem Mobilfunkendgerät 101 über die Auswahl von Menue-Punkten gewählt bzw. abgerufen worden sind. Ferner speichert der Server-Computer 105 vorzugsweise ebenfalls, in welcher Reihenfolge die HTTP-Links von dem konkreten Benutzer aufgerufen worden sind. Damit ist dann dem Server-Computer 105 die "Link-Historie" für den konkreten Benutzer und für die aktuelle USSD-Sitzung des konkreten Benutzers bekannt. Über entsprechende USSD-Strings und diesen zugeordnete Tastenfolgen oder Telefonbucheinträge kann der Benutzer des Mobilfunkendgeräts 101 die bereits früher übermittelten Textnachrichten von dem Server-System 102 über den Unstructured Supplementary Services Data-Kanal 104 erneut anfordern und damit in den ihm bereits übermittelten Textnachrichten "Vor- und Zurückblättern", wie bei einem bekannten Internet- bzw. Web- bzw. WAP-Browser.

Eine Abfrage des Kontostandes des Benutzers kann bei dem erfindungsgemäßen Verfahren beispielsweise dadurch realisiert werden, daß eine in eine Textnachricht konvertierte Internetseite die Kontonummer des Benutzers und dessen PIN (Personal Identification Number) abfragt. Der Benutzer gibt dann seine Kontonummer und seine PIN über die Tastatur seines Mobilfunkendgeräts ein, diese wird über den Unstructured Supplementary Services Data-Kanal übertragen, ausgewertet und der Kontostand wird dem Benutzer durch eine entsprechende Textnachricht über den Unstructured Supplementary Services Data-Kanal übertragen und auf dem Display seines Mobilfunkendgeräts angezeigt.

Es versteht sich, daß die vorstehenden Ausführungen lediglich Ausführungsbeispiele wiedergeben. Es ist offensichtlich, daß das erfindungsgemäe Verfahren dem Benutzer eine Vielzahl weiterer Möglichkeiten zur Abfrage von auf einem Server-System gespeicherten Informationen mittels eines herkömmlichen Mobilfunkendgeräts eröffnet.

### Bezugszeichenliste:

- 100: Mobilfunk-Kommunikationssystem
- 101: Mobilfunkendgerät
- 102: Server-System
- 103: USSD/HTTP-Gateway
- 104: Unstructured Supplementary Services Data-Kanal.
- 105: Server-Computer
- 106: Datenverbindung
- 107: Web-Seiten-Speicher
- 110: Datenverbindung
- 111: Internetverbindung
- 112: HTTP-Gateway

- 200: Haupt-Menue
- 201: Display des Mobilfunkendgeräts

- 300: Unter-Menue "Aktienkurse"

- 400: Unter-Menue "Favoriten"

## Patentansprüche

1. Verfahren zur Bereitstellung einer auf einem Server-System (102) in einem ersten Codeformat gespeicherten Information und zu deren Darstellung auf dem Display (201) eines in einem Mobilfunknetz betriebenen Mobilfunkendgeräts (101), wobei das Mobilfunknetz dem Mobilfunkendgerät einen Sprach- bzw. Datenkanal sowie mindestens einen Signalisierungskanal (104) zur Verfügung stellt, wobei zunächst das Mobilfunkendgerät (101) die Information durch Übermitteln einer entsprechenden Anforderung an das Server-System (102, 105) über den Signalisierungskanal (104) des Mobilfunknetzes anfordert, die durch das Server-System (102, 105) in eine zum Anfordern der Information durch eine Browsereinrichtung erforderliche Anforderung konvertiert wird (103), wobei anschließend zumindest Teile der Information von dem Server-System (102) in eine Textnachricht konvertiert (105) werden und wobei dann die Information in Form der Textnachricht an das Mobilfunkendgerät (101) über den Signalisierungskanal (104) des Mobilfunknetzes übermittelt und auf dem Display (201) des Mobilfunkendgeräts (101) zur Anzeige gebracht wird,
**dadurch gekennzeichnet, dass**
der Signalisierungskanal (104) für das Übermittleln der Anforderung und für das Übermitteln der Textnachricht durch einen Unstructured Supplementary Services Data-Kanal, d. h. durch einen USSD-Kanal, wie insbesondere eines GSM-, GPRS- oder UMTS-Mobilfunknetzes, oder durch einen IS-41 Feature Control Service Data-Kanal bzw. FCS-Data-Kanal, wie insbesondere eines D-AMPS, CDMA- oder TDMA-Mobilfunknetzes, gebildet wird und dass die Anforderung an das Server-System (102, 105) in Form eines Befehlsstrings aus einer numerischen Zeichenfolge und zugehörigen Steuerzeichen übermittelt wird.

2. Verfahren nach Anspruch 1, **dadurch gekennzeichnet, dass** es sich bei der in einem ersten Codeformat gespeicherten Information um eine mit einem Intemet- bzw. Web- bzw. WAP-Browser anforder- und anzeigbare, in der HTML-, WML- oder XML-Programmiersprache verfasste Internet- bzw. Web- bzw. WAP-Seite (107) handelt.

3. Verfahren nach Anspruch 1 oder 2, **dadurch gekennzeichnet, dass** die an das Server-System (102) übermittelte Anforderung in eine Anforderung konvertiert wird (103), die einer Anforderung einer Internet- bzw. Web- bzw. WAP-Seite durch einen Internet- bzw. Web- bzw. WAP-Browser entspricht.

4. Verfahren nach Anspruch 2 oder 3, **dadurch gekennzeichnet, dass** bei der Konvertierung (105) der Intemet- bzw. Web- bzw. WAP-Seite (107) oder eines Teils dieser Seite in eine Textnachricht nur ein Teil des HTML-, WML- oder XML-Codes der Web-Seite konvertiert wird, insbesondere der Code, der einen Text kennzeichnet.

5. Verfahren nach einem der Ansprüche 2 bis 4, **dadurch gekennzeichnet, dass** die Anforderung der Intemet- bzw. Web- bzw. WAP-Seite (107) oder eines sogenannten Links auf der Intemet- bzw. Web- bzw. WAP-Seite über einen Eintrag im Telefonbuch des Mobilfunkendgeräts (101), über eine Kurzwahlnummer oder eine vorprogrammierte Taste oder Tastenfolge des Mobilfunkendgeräts (101) erfolgt.

6. Verfahren nach einem der Ansprüche 2 bis 5, **dadurch gekennzeichnet, dass** die konvertierte Intemet- bzw. Web- bzw. WAP-Seite nach ihrer Übertragung über den Signalisierungskanal (104) im Display (201) des Mobilfunkendgeräts (101) ein Haupt-Menue (200) mit einer Anzahl von Menue-Punkten erzeugt, wobei jeder Menue-Punkt einen Link auf eine Internet-, Intranet- oder WAP-Seite darstellt, die in einem Web-Seiten-Speicher (107) des Server-Systems (102) gespeichert ist.

7. Verfahren nach Anspruch 6, **dadurch gekennzeichnet, dass** jedem Eintrag des Haupt-Menues (200) ein alphanumerisches Zeichen bzw. eine alphanumerische Zeichenfolge, wie eine Ziffer bzw. eine Ziffernfolge oder ein Buchstabe bzw. eine Buchstabenfolge, zugeordnet ist, bei deren bzw. dessen Betätigung auf der Tastatur des Mobilfunkendgeräts (101) ein dem Menue-Punkt zugeordnetes Unter-Menue (300) über den Signalisierungskanal (104) angefordert wird.

8. Verfahren nach Anspruch 7, **dadurch gekennzeichnet, dass** das Unter-Menue (300; 400) durch eine Textnachricht gebildet wird, die durch die Konvertierung (105) einer weiteren Internet- bzw. Web- bzw. WAP-Seite (107) gebildet und an das Mobilfunkendgerät (101) über den Signalisierungskanal (104) zur Darstellung auf dessen Display (201) übertragen wird.

9. Verfahren nach Anspruch 7 oder 8, **dadurch gekennzeichnet, dass** das Unter-Menue (300; 400) unmittelbar ohne die Übertragung des Haupt-Menues (200) über den Signalisierungskanal (104) durch die Übermittlung der dem Unter-Menue zugeordneten Folge alphanumerischer Zeichen abrufbar ist.

10. Verfahren nach einem der Ansprüche 1 bis 9, **dadurch gekennzeichnet, dass** das Mobilfunkendgerät (101) mehrere nacheinander an das Mobilfunkendgerät über den Signalisierungskanal (104) übertragene Textnachrichten speichert.

11. Verfahren nach einem der Ansprüche 1 bis 10, **dadurch gekennzeichnet, dass** das Server-System (102) mehrere nacheinander an das Mobilfunkendgerät (101) über den Signalisierungskanal übertragene Textnachrichten speichert.

12. Verfahren nach Anspruch 10 oder 11, **dadurch gekennzeichnet, dass** die während des aktuellen Benutzungszeitraums des Mobilfunkendgeräts (101) übertragenen Textnachrichten gespeichert werden.

13. Verfahren nach einem der Ansprüche 10 bis 12, **dadurch gekennzeichnet, dass** die übertragenen Textnachrichten der Reihe nach in einem First-In-First-Out-Speicher, d. h. einem FIFO-Speicher, nach Art eines Schieberegisters, gespeichert werden.

14. Verfahren nach einem der Ansprüche 1 bis 13, **dadurch gekennzeichnet, dass** eine vor der aktuell angezeigten Textnachricht (300) angezeigte Textnachricht (200; 400) über die Betätigung einer ersten Taste oder Tastenfolge und/oder eines entsprechenden ersten Telefonbucheintrags des Mobilfunkendgeräts (101) auf dem Display (201) des Mobilfunkendgeräts zur Anzeige gebracht wird.

15. Verfahren nach einem der Ansprüche 1 bis 14, **dadurch gekennzeichnet, dass** eine in der Reihenfolge folgende, bereits angezeigte Textnachricht (200; 300; 400), über die Betätigung einer zweiten Taste oder Tastenfolge und/oder eines entsprechenden zweiten Telefonbucheintrags des Mobilfunkendgeräts auf dessen Display zur Anzeige gebracht wird.

16. Verfahren nach einem der Ansprüche 1 bis 15, **dadurch gekennzeichnet, dass** eine den Benutzer des Mobilfunkendgeräts (101) identifizierende Information, insbesondere die in der SIM-Karte des Mobilfunkendgeräts gespeicherte oder dieser zugeordnete Telefonnummer, über den Signalisierungskanal (104) von dem Mobilfunkendgerät (101) an das Server-System (102) übermittelt wird.

17. Verfahren nach einem der Ansprüche 1 bis 14, **dadurch gekennzeichnet, dass** ein Benutzer des Mobilfunkendgeräts (101) zum Verweis auf bestimmte Internet- bzw. Web- bzw. WAP-Seiten (107) oder auf entsprechende, konvertierte Textnachrichten sich über einen Web-Browser und eine Internetverbindung zum Server-System (102) oder eine Übertragung entsprechender Daten über den Signalisierungskanal (104) ein Haupt-Menue (200) und/oder ein oder mehrere Unter-Menues (300; 400) auf dem Server-System (102) zusammenstellt, indem jedem Menue-Punkt ein HTTP- bzw. Hypertext-Link zugeordnet und durch das Server-System (102) gespeichert wird.

18. Verfahren nach einem der Ansprüche 1 bis 17, **dadurch gekennzeichnet, dass** das Server-System (102) ein Haupt-Menue (200) und/oder ein oder mehrere Unter-Menues (300; 400) zum Verweis auf Internet- bzw. Web- bzw. WAP-Seiten (107) über einen entsprechenden HTTP- bzw. Hypertext-Link oder auf entsprechende konvertierte Textnachrichten erzeugt, wobei das Server-System (102) in Benutzer identifizierender Weise speichert, welche HTTP- bzw. Hypertext-Links von einem betreffenden Benutzer bzw. von dem Mobilfunkendgerät (101) über die Auswahl von Menue-Punkten gewählt bzw. abgerufen worden sind, sodass der Benutzer des Mobilfunkendgeräts (101) bereits früher übermittelte Textnachrichten über eine Vor/Zurück-Funktion erneut anfordern kann.

19. Verfahren nach einem der vorstehenden Ansprüche, **dadurch gekennzeichnet, dass** das Server-System (102) über den Signalisierungskanal (104) alphanumerische Zeichen und deren Funktionsangabe an das Mobilfunkendgerät (101) überträgt, die im Telefonbuch des Mobilfunkendgeräts und/oder in der SIM-Karte des Mobilfunkendgeräts bzw. des Benutzers gespeichert werden.

20. Computersystem, **dadurch gekennzeichnet, dass** das Computersystem (102) zur Durchführung eines Verfahrens nach einem der vorstehenden Verfahrensansprüche modifiziert worden ist.

21. Computerprogrammprodukt, das direkt in den internen Speicher eines digitalen Server-System-Computers (105) geladen werden kann, **dadurch gekennzeichnet, dass** das Computerprogrammprodukt Softwarecodeabschnitte aufweist, mit denen das Verfahren nach einem der vorstehenden Verfahrensansprüche ausgeführt wird, wenn das Produkt auf dem Server-System-Computer läuft.

22. Computerprogrammprodukt, das auf einem computergeeigneten Medium gespeichert ist, **dadurch gekennzeichnet, dass** das Computerprogrammprodukt Softwarecodeabschnitte aufweist mit denen das Verfahren nach einem der vorstehenden Verfahrensansprüche ausgeführt wird, wenn das Produkt in den internen Speicher eines digitalen Server-System-Computers (105) geladen wird und auf dem Server-System-Computer läuft.

23. Mobilfunkendgerät, **dadurch gekennzeichnet, dass** das Mobilfunkendgerät (101) zur Durchführung des Verfahrens nach einem der vorstehenden Verfahrensansprüche modifiziert worden ist.

24. Mobilfunk-Kommunikationssystem, **dadurch gekennzeichnet, dass** das Mobilfunk-Kommunikationssystem (100) zur Durchführung des Verfahrens nach einem der vorstehenden Verfahrensansprüche modifiziert worden ist.

## Claims

1. A method for making available information, which is stored on a server system (102) in a first code format, and for displaying it on display (201) of a mobile telephony terminal (101) operated in a mobile telephony network, wherein the mobile telephony network makes available to the mobile telephony terminal a voice or data channel and also at least one signaling channel (104), wherein firstly mobile telephony terminal (101) requests the information by transmitting a corresponding request to server system (102, 105) via signaling channel (104) of the mobile telephony network, which request is converted (103) by server system (102, 105) into a request necessary for requesting the information through a browser device, wherein then at least some of the information is converted (105) by server system (102) into a text message, and
wherein then the information is transmitted in the form of the text message to mobile telephony terminal (101) via signaling channel (104) of the mobile telephony network and is displayed on display (201) of mobile telephony terminal (101),
wherein
signaling channel (104) for transmitting the request and for transmitting the text message is formed by an Unstructured Supplementary Services Data channel, i.e., by a USSD channel, such as, in particular, of a GSM, GPRS, or UMTS mobile telephony network, or by an IS-41 Feature Control Service data channel or FCS data channel, such as, in particular, of a D-AMPS, CDMA, or TDMA mobile telephony network, and in that the request to server system (102, 105) is transmitted in the form of a command string consisting of a sequence of numerical characters and associated control characters.

2. A method according to Claim 1, wherein the information stored in a first code format is an Internet page or Web page or WAP page (107), which is written in the HTML, WML, or XML programming language, and can be requested and displayed by means of an Internet or Web or WAP browser.

3. A method according to Claim 1 or 2, wherein the request transmitted to server system (102) is converted (103) into a request that corresponds to a request for an Internet or Web or WAP page through an Internet or Web or WAP browser.

4. A method according to Claim 2 or 3, wherein, when converting (105) Internet or Web or WAP page (107) or part of this page into a text message, only part of the HTML, WML, or XML code of the Web page is converted, in particular, the code relating to a text.

5. A method according to one of Claims 2 to 4, wherein the request for Internet or Web or WAP page (107) or a so-called link on the Internet or Web or WAP page takes place via an entry in the telephone book of mobile telephony terminal (101), via a speed-dial number or a preprogrammed key or sequence of keys on mobile telephony terminal (101).

6. A method according to one of Claims 2 to 5, wherein the converted Internet or Web or WAP page, after transmission via signaling channel (104) to display (201) of mobile telephony terminal (101), generates a main menu (200) containing a number of menu options, wherein each menu option represents a link to an Internet, Intranet, or WAP page, which is stored in a Web page memory (107) of server system (102).

7. A method according to Claim 6, wherein each entry in main menu (200) is assigned an alphanumeric character or a sequence of alphanumeric characters, such as a number or a sequence of numbers or a letter or a sequence of letters, the pressing of which on the keypad of mobile telephony terminal (101) sends a request via signaling channel (104) for a submenu (300) assigned to the menu option.

8. A method according to Claim 7, wherein submenu (300; 400) is formed by a text message, which is formed by converting (105) a further Internet or Web or WAP page (107), and is transmitted to mobile telephony terminal (101) via signaling channel (104) so as to be displayed on display (201) thereof.

9. A method according to Claim 7 or 8, wherein submenu (300; 400) can be called up directly without the transmission of main menu (200) via signaling channel (104) by transmitting the sequence of alphanumeric characters assigned to the submenu.

10. A method according to one of Claims 1 to 9, wherein mobile telephony terminal (101) stores a plurality of text messages transmitted one after the other to the mobile telephony terminal via signaling channel (104).

11. A method according to one of Claims 1 to 10, wherein server system (102) stores a plurality of text messages transmitted one after the other to mobile telephony terminal (101) via the signaling channel.

12. A method according to Claim 10 or 11, wherein the text messages transmitted during the current use period of mobile telephony terminal (101) are stored.

13. A method according to one of Claims 10 to 12, wherein the transmitted text messages are stored in sequence in a first-in, first-out memory, i.e., a FIFO memory, in the manner of shift register.

14. A method according to one of Claims 1 to 13, wherein a text message (200; 400) displayed prior to the currently displayed text message (300) is displayed on display (201) of the mobile telephony terminal by pressing a first key or sequence of keys and/or a corresponding first telephone book entry of mobile telephony terminal (101).

15. A method according to one of Claims 1 to 14, wherein a text message (200; 300; 400), which has already been displayed and which is next is sequence, is displayed on the display of the mobile telephony terminal by pressing a second key or sequence of keys and/or a corresponding second telephone book entry of the mobile telephony terminal.

16. A method according to one of Claims 1 to 15, wherein information that identifies the user of mobile telephony terminal (101), in particular, the telephone number stored in the SIM card of the mobile telephony terminal or assigned thereto, is transmitted via signaling channel (104) from mobile telephony terminal (101) to server system (102).

17. A method according to one of Claims 1 to 14, wherein a user of mobile telephony terminal (101), to refer to certain Internet or Web or WAP pages (107) or to corresponding converted text messages, sets up a main menu (200) and/or one or more submenus (300; 400) on server system (102) via a Web browser and an Internet connection to server system (102) or by transmitting corresponding data via signaling channel (104), wherein an HTTP or hypertext link is assigned to each menu option and is stored by server system (102).

18. A method according to one of Claims 1 to 17, wherein server system (102) generates a main menu (200) and/or one or more submenus (300; 400) to refer to Internet or Web or WAP pages (107) via a corresponding HTTP or hypertext link or to corresponding converted text messages, wherein server system (102) stores, in a user-identifying manner, which HTTP or hypertext links have been selected or called up by a respective user or by mobile telephony terminal (101) via the selection of menu options, so that the user of mobile telephony terminal (101) can again request text messages already transmitted previously via a forward/back function.

19. A method according to one of the preceding claims, wherein server system (102) transmits alphanumeric characters and their function to mobile telephony terminal (101) via signaling channel (104), and these are stored in the telephone book of the mobile telephony terminal and/or in the SIM card of the mobile telephony terminal or of the user.

20. A computer system, wherein computer system (102) has been modified in order to implement a method according to one of the preceding method claims.

21. A computer program product that can be loaded directly into the internal memory of a digital server system computer (105), wherein the computer program product comprises portions of software code, by means of which the method according to one of the preceding method claims is implemented when the product runs on the server system computer.

22. A computer program product that is stored on a computer-compatible medium, wherein the computer program product comprises portions of software code, by means of which the method according to one of the preceding method claims is implemented when the product is loaded into the internal memory of a digital server system computer (105) and runs on the server system computer.

23. A mobile telephony terminal, wherein mobile telephony terminal (101) has been modified in order to implement the method according to one of the preceding method claims.

24. A mobile telephony communication system, wherein mobile telephony communication system (100) has been modified in order to implement the method according to one of the preceding method claims.

## Revendications

1. Procédé pour la préparation d'une information stockée sur un système serveur (102) dans un premier format de code et pour la représentation de celle-ci sur l'écran d'affichage (201) d'un terminal de téléphone mobile (101) exploité dans un réseau de téléphone mobile, le réseau de téléphone mobile mettant à disposition du terminal de téléphone mobile un canal de voix ou de données ainsi qu'au moins un canal de signalisation (104), le terminal de téléphone mobile (101) demandant d'abord l'information en communiquant une demande correspondante au système serveur (102, 105) par le canal de signalisation (104) du réseau de téléphone mobile, laquelle est convertie par le système serveur (102, 105) en une demande nécessaire pour demander l'information à un dispositif de navigation (103), au moins des parties de l'information étant par la suite converties par le système serveur (102) en un message texte (105) et l'information sous la forme du message texte étant ensuite communiquée au terminal de téléphone mobile (101) par le canal de signalisation (104) du réseau de téléphone mobile et affichée sur l'écran d'affichage (201) du terminal de téléphone mobile (101),
**caractérisé en ce que**
le canal de signalisation (104) pour la communication de la demande et pour la communication du message texte est formé par un canal de données de service complémentaire non structuré, c'est-à-dire par un canal USSD, comme en particulier un réseau de téléphone mobile GSM, GPRS ou UMTS, ou par un canal de données FCS IS-41 ou canal de données FCS, comme en particulier un réseau de téléphone mobile D-AMPS, AMRC ou AMRT, et **en ce que** la demande au système serveur (102, 105) est communiquée sous forme d'une chaîne d'instructions à partir d'une séquence de caractères numériques et de caractères de commande associés.

2. Procédé selon la revendication 1, **caractérisé en ce que**, quant à l'information stockée dans un premier format de code, il s'agit d'une page Internet, Web ou WAP (107) composée dans le langage de programmation HTML ou WML ou XML, pouvant être affichée et demandée avec un navigateur Internet ou Web ou WAP.

3. Procédé selon la revendication 1 ou 2, **caractérisé en ce que** la demande communiquée au système serveur (102) est convertie en une demande (103) qui correspond à une demande d'une page Internet ou Web ou WAP par un navigateur Internet Web ou WAP.

4. Procédé selon la revendication 2 ou 3, **caractérisé en ce que**, lors de la conversion (105) de la page Internet ou Web ou WAP (107) ou d'une partie de cette page en un , uniquement une partie des codes HTML, WML ou XML de la page Web est convertie, en particulier le code qui caractérise un texte.

5. Procédé selon l'une des revendications 2 à 4, **caractérisé en ce que** la demande de la page Internet ou Web ou WAP (107) ou de ce que l'on appelle un lien à la page Internet ou Web ou WAP se fait par une entrée dans l'annuaire du terminal de téléphone mobile (101), par un numéro abrégé ou une touche préprogrammée ou une séquence de touches du terminal de téléphone mobile (101).

6. Procédé selon l'une des revendications 2 à 5, **caractérisé en ce que** la page Internet ou Web ou WAP convertie après sa transmission par le canal de signalisation (104) produit sur l'écran d'affichage (201) du terminal de téléphone mobile (101) un menu principal (200) avec un certain nombre de commandes de menu, chaque commande de menu représentant un lien à une page Internet, Intranet ou WAP qui est enregistrée dans une mémoire de pages Web (107) du système serveur (102).

7. Procédé selon la revendication 6, **caractérisé en ce qu'**à chaque entrée du menu principal (200) est associé un caractère alphanumérique ou une séquence de caractères alphanumériques, comme un chiffre ou une séquence de chiffres ou une lettre ou une séquence de lettres, lors de l'activation duquel respectivement de laquelle sur le clavier du terminal de téléphone mobile (101) un sous-menu (300) associé à la commande de menu est demandé par le canal de signalisation (104).

8. Procédé selon la revendication 7, **caractérisé en ce que** le sous-menu (300 ; 400) est formé par un message texte qui est formé par la conversion (105) d'une autre page Internet ou Web ou WAP (107) et est transmis au terminal de téléphone mobile (101) par le canal de signalisation (104) à des fins de représentation sur l'écran d'affichage (201) du terminal de téléphone mobile.

9. Procédé selon la revendication 7 ou 8, **caractérisé en ce que** le sous-menu (300; 400) peut être appelé immédiatement sans la transmission du menu principal (200) par le canal de signalisation (104) par la communication des caractères alphanumériques associés au sous-menu.

10. Procédé selon l'une des revendications 1 à 9, **caractérisé en ce que** le terminal de téléphone mobile (101) enregistre plusieurs messages texte transmis les uns après les autres au terminal de téléphone mobile par le canal de signalisation (104).

11. Procédé selon l'une des revendications 1 à 10, **caractérisé en ce que** le système serveur (102) enregistre plusieurs messages texte transmis les uns après les autres au terminal de téléphone mobile (101) par le canal de signalisation.

12. Procédé selon la revendication 10 ou 11, **caractérisé en ce que** les messages texte transmis pendant la période de temps d'utilisation actuelle du terminal de téléphone mobile (101) sont enregistrés.

13. Procédé selon l'une des revendications 10 à 12, **caractérisé en ce que** les messages texte transmis de la file sont enregistrés dans une mémoire « premier entré, premier sorti », c'est-à-dire une mémoire FIFO, à la manière d'un registre à décalage.

14. Procédé selon l'une des revendications 1 à 13, **caractérisé en ce qu'**un (200 ; 400) affiché avant le message texte (300) présentement affiché est affiché par l'activation d'une deuxième touche ou séquence de touches et/ou d'une première entrée correspondante de l'annuaire du terminal de téléphone mobile (101) sur l'écran d'affichage (201) du terminal de téléphone mobile.

15. Procédé selon l'une des revendications 1 à 14, **caractérisé en ce qu'**un message texte déjà affiché, suivant dans la séquence, (200 ; 300 ; 400), est affiché par l'activation d'une deuxième touche ou séquence de touches et/ou d'une deuxième entrée correspondante de l'annuaire du terminal de téléphone mobile sur écran d'affichage de celui-ci.

16. Procédé selon l'une des revendications 1 à 15, **caractérisé en ce qu'**une information identifiant l'utilisateur du terminal de téléphone mobile (101), en particulier le numéro de téléphone enregistré dans la carte SIM du terminal de téléphone mobile ou associé à celle-ci, est communiquée par le terminal de téléphone mobile (101) au système serveur (102) par le canal de signalisation (104).

17. Procédé selon l'une des revendications 1 à 14, **caractérisé en ce qu'**un utilisateur du terminal de téléphone mobile (101) pour renvoi à certaines pages Internet ou Web ou WAP (107) ou à des messages texte correspondants, convertis, s'établit par le navigateur Web et d'une liaison Internet au système serveur (102) ou d'une transmission de données correspondantes par le canal de signalisation (104) un menu principal (200) et/ou un ou plusieurs sous-menus (300 ; 400) sur le système serveur (102) par le fait qu'un lien HTTP ou hypertexte est associé à chaque commande de menu et enregistré par le système serveur (102).

18. Procédé selon l'une des revendications 1 à 17, **caractérisé en ce que** le système serveur (102) produit un menu principal (200) et/ou un ou plusieurs sous-menus (300 ; 400) pour renvoi à des pages Internet ou Web ou WAP (107) par le biais d'un lien correspondant HTTP ou hypertexte ou à des messages texte correspondants convertis, le système serveur (102) enregistrant d'une manière identifiant les utilisateurs les liens HTTP ou hypertextes qui ont été appelés ou sélectionnés par un utilisateur concerné ou par le terminal de téléphone mobile (101) par la sélection de commandes de menu, de sorte que l'utilisateur du terminal de téléphone mobile (101) puisse demander de nouveau des messages texte déjà communiqués plus tôt par une fonction Suivant/Précédent.

19. Procédé selon l'une des revendications précédentes, **caractérisé en ce que** le système serveur (102) transmet au terminal de téléphone mobile (101) par le canal de signalisation (104) des caractères alphanumériques et leur indication fonctionnelle, qui sont enregistrés dans l'annuaire du terminal de téléphone mobile et/ou dans la carte SIM du terminal de téléphone mobile de l'utilisateur.

20. Système informatique, **caractérisé en ce que** le système informatique (102) a été modifié afin d'exécuter un procédé selon une des revendications de procédé précédentes.

21. Produit de programme informatique qui peut être chargé directement dans la mémoire interne d'un ordinateur de système serveur numérique (105), **caractérisé en ce que** le produit de programme informatique présente des sections de code logiciel avec lesquelles est effectué le procédé selon une des revendications de procédé précédentes lorsque le produit est en fonctionnement sur l'ordinateur du système serveur.

22. Produit de programme informatique qui est enregistré sur un support adapté à un ordinateur, **caractérisé en ce que** le produit de programme informatique présente des sections de code logiciel avec lesquelles est effectué le procédé selon une des revendications de procédé précédentes lorsque le produit est chargé dans la mémoire interne d'un ordinateur de système serveur numérique (105) et est en fonctionnement sur l'ordinateur du système serveur.

23. Terminal de téléphone mobile, **caractérisé en ce que** le terminal de téléphone mobile (101) a été modifié afin d'exécuter le procédé selon une des revendications de procédé précédentes.

24. Système de communication de téléphone mobile, **caractérisé en ce que** le système de communication de téléphone mobile (100) a été modifié afin d'exécuter le procédé selon une des revendications de procédé précédentes.
